# EUROPEAN PATENT SPECIFICATION

(11) **EP 3 043 349 B1**
(45) Date of publication and mention of the grant of the patent: **30.10.2019**
(21) Application number: 16157941.2
(22) Date of filing: 01.12.2006
(51) Int. Cl.: G10L 15/22, G10L 15/00, G10L 15/28

(54) **A WORDS RECOGNITION APPARATUS**
WORTERKENNUNGSVORRICHTUNG
APPAREIL DE RECONNAISSANCE DE MOTS

(30) Priority: 06.01.2006 JP 2006001845
(43) Date of publication of application: 13.07.2016
(62) Divisional of application: 12152804.6
(73) Proprietor: Pioneer Corporation, Tokyo 113-0021 (JP)
(72) Inventor: Toyama, Soichi, Tsurugashima-shi, Saitama 3502288 (JP)
(74) Representative: Isarpatent

(56) References cited:
- WO-A-02/11121
- JP-A- 2003 177 789
- US-A1- 2005 165 609

## Description

### Technical Field

The present invention relates to a technical field of a speech recognition apparatus for receiving a speech made by a user, and recognizing the speech made by the user in accordance with the received speech, and a display method and a display processing program in the speech recognition apparatus.

### Background Art

A speech recognition apparatus has become to a practical use, said speech recognition apparatus carrying out a speech recognition process of analyzing a speech made by a user, and recognizing the speech, and carrying out a variety of processes in accordance with the recognized speech.

As a system with a speech recognition apparatus mentioned above, for example, in a case of a navigation system which guides a moving object along a route, by recognizing a speech made by a user as a command for system, the designation of destination, or the like, a process is carried out, for example, a destination designated by the user is searched, a display mode of map is changed, or information concerning traffic congestion is displayed.

Among such speech recognition apparatuses, there is a speech recognition apparatus which displays on a screen a list of speeches which can be recognized (which can be made) at that time in accordance with a condition of the apparatus or the like. A user selects and make a necessary speech from the speeches displayed in the list, so that the user can enter a command, carry out an operation, or the like for the apparatus smoothly and without confusion.

Among the speech recognition apparatuses, there is some speech recognition apparatuses which do not always receive a speech made by a user, and carry out a speech recognition process, and which carry out a speech recognition process when a user carries out a predetermined operation to indicate the start of the process, such as pressing (a pressing operation) of a speech button. As one of reasons why such mode is adopted, for example, in a case where a user make a speech which is not a command or the like for a speech recognition apparatus such as a usual conversation, if a speech recognition process is always carried out, such speech is erroneously recognized as a command or the like for the apparatus, resulting in a process which the user does not intend to carry out being carried out.

However, in order to carry out a speech recognition process, for example, a preparation process, an initialization process, or the like are necessary, such as reading out a program for speech recognition process from a recorded medium or the like, reserving an area in which a received speech is to be stored as speech information. As a result, in some cases, a certain period of time is necessary from an operation of pressing or the like of speech button until the actual start of speech recognition process. However, in some cases, a user who is not familiar with an operation of such apparatus makes a speech, such as a command or the like for the apparatus, immediately after the pressing or the like of speech button. In such cases, it is not possible to properly receive a speech, resulting in a problem.

Under the circumstances, in the past, it is usual to inform a user, by sound, of the timing at which a speech is to be made (for example, "Please make a speech when you hear a beep.").

For example, in Patent Document No. 1, a technique is disclosed, in which an image with a motion or the like is displayed in a predetermined area such as a corner of screen, and the motion of the image or the like intuitively informs a user of a period of time until an input of speech is possible.

Patent Document No. 1: Japanese Patent Laid-open No. 2003-177789

In another example, document US 2005/165609 A1 discloses a speech recognition apparatus having an interface for displaying elapsed response time in which a user utterance is expected to be input.

### Disclosure of the Invention

### Problem to be solved by the Invention

However, since a user who is not familiar with an operation of apparatus does not understand which speech he should make, in most cases, he searches a speech which he should make while observing closely a list of speeches, which he can make, displayed on a screen. Under the circumstances, even if an image with a motion or the like is displayed in a predetermined area, a user concentrates on a list of speeches which he can make, so that it is difficult to visually recognize such image, resulting in it being difficult to recognize the timing at which the user should make a speech.

The present invention has been made in consideration of the above-mentioned problem, and it is an object of the present invention to provide a speech recognition apparatus, a display method, and a display processing program in which a user can easily recognize the timing at which a speech is to be made, even while observing a list of speeches which can be made, displayed on a screen.

### Means for solving the Problem

In order to solve the above problems, a word recognition apparatus as defined in claim 1, a display method of claim 4, a display processing program of claim 5 and a recording medium of claim 6 are provided.

### Brief Description of the Drawings

Figs. 1A and 1B are views showing an example of configuration of screen by a navigation apparatus according to the embodiment, and Fig. 1A shows a screen immediately after the pressing of speech button, and Fig. 1B shows a screen after the start of speech recognition process.
Fig. 2 is a block diagram showing an example of schematic structure of navigation apparatus 100 according to the embodiment.
Fig. 3 is a flow chart showing an example of flow of process of navigation apparatus 100 according to the embodiment.
Figs. 4A and 4B are views showing an example of configuration of screen by a navigation apparatus according to a modification of the embodiment, and Fig. 4A shows a screen immediately after the first pressing of speech button, and Fig. 4B shows a screen after a guidance sound has been played back.
Fig. 5 is a flow chart showing an example of flow of process of navigation apparatus 100 according to the modification of the embodiment. Description of Reference Characters

- 1:: list of speeches
- 2a:: speech prohibition message
- 2b:: speech permission message
- 3:: speech prohibition mark
- 4:: guidance message
- 5:: message for waiting for pressing of speech button
- 100:: navigation apparatus
- 101:: GPS receiving unit
- 102:: sensor unit
- 103:: interface unit
- 104:: VICS data receiving unit
- 105:: HD drive
- 106:: DVD drive
- 107:: sound processing unit
- 108:: speaker
- 109:: operation unit
- 110:: display unit
- 111:: buffer memory
- 112:: display control unit
- 113:: microphone
- 114:: speech recognition unit
- 115:: system condition monitoring unit
- 116:: system control unit
- 117:: RAM/ROM

### Best Mode for carrying out the Invention

Referring now to the drawings, the best mode of the present invention will be described in detail. The embodiment explained below is one in a case where the present invention has been applied to a navigation apparatus which guides a car along a route.

### [1. Configuration of Screen]

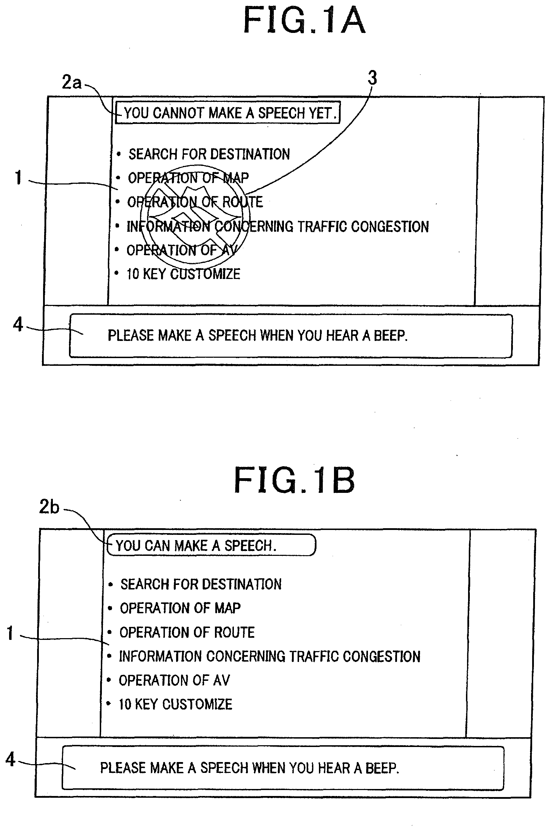

A navigation apparatus according to the embodiment is one which receives a speech made by a user, carries out a speech recognition process, recognizes a speech made by the user as a command for the apparatus, a designation of destination, or the like, and carries out an operation in accordance with the recognized result. At this time, during a period of time from the user's pressing of speech button for instructing the start of speech recognition process until the actual start of speech recognition process, a message and a mark which mean prohibition of speech are displayed on a screen. First, a configuration of the display screen will be described with reference to Figs. 1A and 1B.

Figs. 1A and 1B are views showing an example of configuration of screen by a navigation apparatus according to the embodiment, and Fig. 1A shows a screen immediately after the pressing of speech button, and Fig. 1B shows a screen after the start of speech recognition process.

First, a condition immediately after a user has pressed a speech button is one in which a speech recognition process cannot be carried out. At this time, as shown in Fig. 1A, a speech list 1 (an example of recognizable characters) is displayed in the vicinity of the center of the screen. In the upper portion of the list 1, a speech prohibition message 2a (an example of prohibition character) is displayed. Further, in an overlaid condition with the speech list 1, a speech prohibition mark 3 (an example of prohibition image) is displayed. In the lower portion of the screeen, a guidance message 4 is arranged to be displayed.

The speech list 1 is one in which horizontally written speeches which can be recognized by a navigation apparatus are arranged and displayed vertically. These speeches change according to the circumstances. For example, under the circumstances where a usual command is received, "Search for Destination", "Operation of Map", "Operation of Route", or the like are displayed. For example, under the circumstances where a genre of destination is received, "Station", "Baseball Stadium", "Amusement Park", or the like are displayed.

The speech prohibition message 2a is a character indicative of speeches which mean prohibition of user's speech (for example, "You cannot yet make a speech", or the like). The character is displayed in the uppermost in the same line as the speech list 1. A display mode of the speech prohibition message 2a, such as a font, the size of character, the weight of character, a character color, and a background color, is different from that of the speech list 1. Concretely, a square-cornered font is used in the speech list 1, and a rounded font is used in the speech prohibition message 2a. A big and weight character is used in the speech prohibition message 2a, as compared with the speech list 1. A character of the speech list 1 is colored white, and a character of the speech prohibition message 2a is colored red. Further, a background of the speech list 1 is colored dark blue, and a background of the speech prohibition message 2a is colored pink.

A user (in particular, a beginner or the like who is not familiar with an operation of navigation apparatus) tries to search for a speech to be made from the speech list 1 displayed on a screen. At this time, generally, a user is apt to start to read from the uppermost character in the speech list 1, and continues to read successively to the lower characters. Here, since the speech prohibition message 2a is displayed in the same line as the speech list 1, and in the uppermost, there is a high possibility that a user reads the character at first. Even if a user starts to read from the middle or the lowermost of the speech list 1, there is a high possibility that a user also reads the speech prohibition message 2a while the user reads the speech list 1 through, since the speech prohibition message 2a is displayed in the same line as the speech list 1. Further, since a display mode of the speech prohibition message 2a is different from that of the speech list 1, the speech prohibition message 2a is conspicuous, and a probability that a user reads the speech prohibition message 2a becomes higher. Thus, a user can easily recognize that he should not make a speech at the present. Further, since a character color or a background color of the speech prohibition message 2a is red or pink which implies prohibition, danger, or the like, it is easy to recognize the prohibition of speech without completely reading the character.

The speech prohibition mark 3 is a mark indicative of prohibition of user's speech. In an example shown in Fig. 1A, like a prohibition mark seen in a traffic mark or the like, a picture of lip is surrounded by a red circular frame, and further, an oblique line is drawn on the lip. By overlaying and displaying the speech prohibition mark 3 on the speech list 1, while a user sees the whole of the speech list 1, or reads the speech list 1 through, the user necessarily visually recognizes the mark. Therefore, by the speech prohibition mark 3, a user can also easily recognize that he should not make a speech at the present. It is not necessary that the speech prohibition mark 3 is overlaid on the whole of the speech list 1, and it is possible that the speech prohibition mark 3 is overlaid and displayed on a portion of the speech list 1 so that the speech prohibition mark 3 and the speech list 1 are visually recognized integrally with each other.

The guidance message 4 is is displayed as an guidance of operation, an explanation of screen, or the like (for example, "Please make a speech when you hear a beep.").

Now, when a speech recognition process is started by a navigation apparatus, as shown in Fig. 1B, a speech permission message 2b (an example of permission character 9 is displayed in the position where the speech prohibition message 2a was displayed before. The speech prohibition mark 3 is erased from the screen.

The speech permission message 2b is a character indicative of speech which means the permission of user's speech (for example, "You can make a speech", or the like), its character color is blue, and its background color is sky-blue. Since the speech permission message 2b is displayed in the same line as the speech list 1 similarly with the speech prohibition message 2a, it can be easily recognized that a user may make a speech. Further, since a character color and a background color of the speech permission message 2b are blue and sky-blue, respectively, implying permission, safety, or the like, unlike the speech prohibition message 2a, it is easy to image the change from the speech prohibition to the speech permission.

Further, since the speech prohibition mark 3 which was displayed before is erased, it can also be easily recognized that a user may make a speech.

It is not necessary that the speech permission message 2b is displayed. Based on the fact that the speech prohibition message 2a is erased from a screen, it is possible that the permission of speech is recognized by a user. On the other hand, it is possible that a mark indicative of permission of speech is displayed at the position where the speech prohibition mark 3 was displayed before.

As explained above, according to the embodiment, by configurations of screens shown in Figs. 1A and 1B, the timing of speech can be easily recognized, even while a user is seeing the speech list 1.

The speech prohibition message 2a and the speech permission message 2b are not displayed on the speech list 1, but may be displayed, for example, in the middle or in the lower of the list 1.

The speech list 1 is not displayed in a horizontally-written and vertically-lined manner, but may be displayed in a vertically-written and horizontally-lined manner. It is also possible that the speech list 1 is displayed in a plurality of lines, or are displayed in a grid pattern. That is to say, it is sufficient that a speech which can be recognized by a navigation apparatus is arranged in a certain configuration.

At this time, as long as the speech prohibition message 2a and the speech permission message 2b are arranged in the same line as the speech list 1, they can be displayed at any position. For example, it is possible that they are displayed in an extension line of the heading of the speech list 1 (for example, in the uppermost, on the left, or the like), or in an extension line of the end of the speech list 1 (for example, in the lowermost, on the right, or the like), or they are included and displayed in the speech list 1 itself (for example, in the middle of the speech list 1, or the like). That is to say, it is sufficient that they are displayed at the position where a user naturally reads as the user proceeds to reads the speech list 1, or at the position which is visually recognized integrally to the speech list 1 when the whole of the speech list 1 is seen, or the like.

It is possible that the speech list 1, the speech prohibition message 2a, and the speech permission message 2b are displayed in the same mode. However, it is preferable that they are displayed in the different mode in order that they are easily distinguished and recognized. At this time, it is not limited to a change of font, size, weight, character color, or a background color which have been mentioned above, but it is possible that, for example, a character is oblique, or underlined. Further, it is possible that, for example, the speech list 1 is displayed in Japanese language, and the speech prohibition message 2a or the like is displayed in English language, or a background image or pattern is changed. Further, about the speech prohibition message 2a and the speech permission message 2b, it is preferable that they are displayed in such a way that a speech prohibition and a speech permission are easily distinguished and recognized. At his time, it is not limited to a change of character color or background color which have been mentioned above.

Furthermore, in a screen shown in Fig. 1A, it is not necessary that both of the speech prohibition message 2a and the speech prohibition mark 3 are displayed. By only displaying either one, it is possible to make a user recognize the timing of making a speech.

### [2. Structure and Function of Navigation Apparatus]

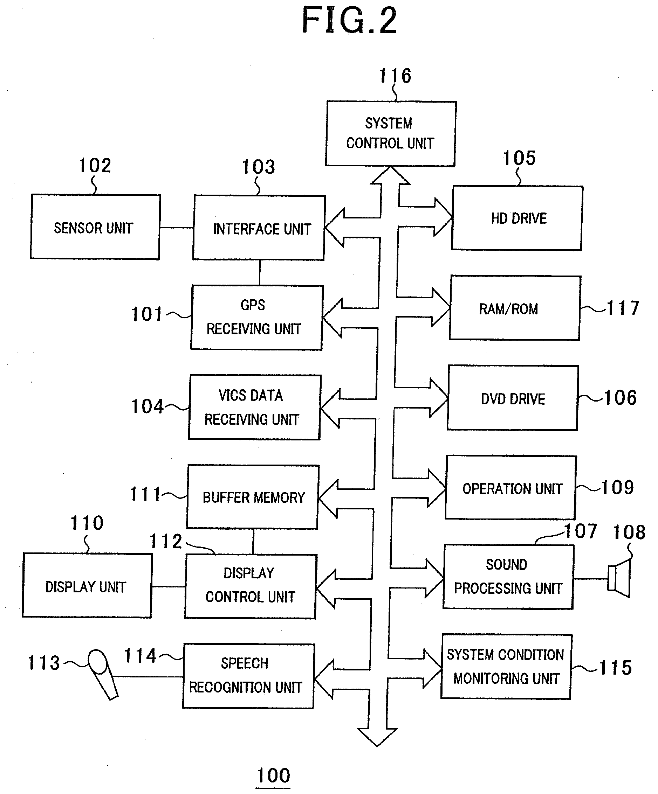

Referring now to Fig. 2, the concrete structure and function of navigation apparatus 100 according to the embodiment will be explained.

Fig. 2 is a block diagram showing an example of schematic structure of navigation apparatus 100 according to the embodiment.

As shown in Fig. 2, a navigation apparatus 100 is composed of the following units:
a GPS (Global Positioning System) receiving unit 101 which receives a GPS data,
a sensor unit 102 which detects a traveling data, including a traveling speed, an acceleration, a traveling direction, or the like of vehicle,
an interface unit 103 which calculates the position of vehicle based on the GPS data and the traveling data,
a VICS (Vehicle Information Communication System) data receiving unit 104 which receives a VICS data,
an HD (Hard Disc) drive 105 which writes and reads a data in and from an HD in which a variety of data such as a map data have been stored,
a DVD (Digital Versatile Disc) drive 106 which reads a variety of data from a DVD disc,
a sound processing unit 107 which produces a sound including a route guidance, an operation guidance, or the like,
a speaker 108 which outputs a sound produced by the sound processing unit 107, as a sound wave of audio frequency,
an operation unit 109 which is used when a user inputs a command to a system,
a display unit 110 which displays a map data, a vehicle position, or the like,
a display control unit 112 which controls the display unit 110 by using a buffer memory 111,
a microphone 113 which collects the user's speech,
a speech recognition unit 114 which recognizes the user's speech based on a speech collected by the microphone 113 , as a command to a system, or the like,
a system condition monitoring unit 115 which mainly detects a system condition of the navigation apparatus 100 concerning a speech recognition process,
a system control unit 116 which controls the whole of the system, and
a RAM (Random Access Memory) / ROM (Read Only Memory) 117.

The system control unit 116 and each unit are connected to each other via a system bus.

The display unit 110 constitutes an example of display means of the invention, the operation unit 109 constitutes an example of indication means of the invention, the microphone 113 constitutes an example of speech input means of the invention, the speech recognition unit 114 constitutes an example of speech recognition means of the invention, and the system control unit 116 constitutes an example of display control means of the invention.

The operation unit 109 is composed of a remote control device or the like comprising a variety of buttons including a speech button, a numeric key, a cursor key, or the like. The operation unit 109 is arranged to output an instruction signal corresponding to the user's input operation, to the system control unit 116.

The display unit 110 is composed of, for example, a liquid crystal panel, an organic EL (Electro Luminescence), or the like, and is arranged to display a map data or the like on a screen under the control of the display control unit 112, and further, display a variety of information necessary for route guidance such as the position of vehicle in an overlaid condition therewith. The display unit 110 is arranged to display an image shown in Fig. 1A when a speech button is pressed by a user, and display an image shown in Fig. 1B after a speech recognition process has been started by the speech recognition unit 114.

The display control unit 112 is arranged to produce, an image data corresponding to a data inputted under the control of the system control unit 116, in the buffer memory 111, and read the image data from the buffer memory 111 at a predetermined timing, and output it to the display unit 110. Thus, screens shown in Figs. 1A and 1B are displayed by the display unit 110.

The microphone 113 is arranged to collect a speech made by a user, and supply it as an electrical signal (a speech signal) to the speech recognition unit 114.

The speech recognition unit 114 is arranged to carry out a speech recognition process under the control of the system control unit 116. Specifically, when a control signal indicative of start command for speech recognition process is supplied from the system control unit 116 to the speech recognition unit 114, the speech recognition unit 114 carries out a set-up process (a preparatory process for carrying out a speech recognition process), and at the time of completion of the set-up process (at the time when a speech recognition process is ready to be carried out), the speech recognition unit 114 starts to input a speech signal from the microphone 113. The speech signal is converted to a digital signal, and is stored as speech information in a memory included in the speech recognition unit 114 or the like, and the stored speech information is analyzed and a speech made by a user is recognized. For example, by comparing the recognized speech with a list of predetermined command patterns or the like, a command which a user issued as a speech is recognized, and a control signal corresponding to the recognized command is outputted to the system control unit 116.

The system condition monitoring unit 115 monitors an indication signal outputted from the operation unit 109, and an operation condition of the speech recognition unit 114. When a speech button is pressed, when the speech recognition unit 114 completes a set-up process and starts a speech recognition process, and when the speech recognition unit 114 finishes the process, the system condition monitoring unit 115 outputs a control signal corresponding to such condition, to the system control unit 116.

The system control unit 116 is composed of, mainly, a CPU (Central Processing Unit), and is arranged to include a variety of input and output ports, such as a GPS receiving port, or a key input port.

The system control unit 116 is arranged to control the whole of the navigation apparatus 100, and read a control program (for example, a display process program, or the like) stored in the HD drive 105, the RAM/ROM 117, or the like, and carry out a variety of processes, and temporally preserve a data being processed, in the RAM/ROM 117.

For example, the system control unit 116, at the time of carrying out a route guidance, is arranged to, based on the position data of vehicle outputted from the interface unit 103, and a map data read from the HD under the control of the HD drive 105, carry out a correction process such as a map matching, and control in such a way that route guidance information is displayed on a map indicative of a surrounding area including the present position of vehicle in the display unit 110, and also control in such a way that route guidance information is outputted as sound from the sound processing unit 107.

The system control unit 116 is arranged to, in accordance with a control signal outputted from the system condition monitoring unit 115, control the speech recognition unit 114, and control in such a way that screens shown in Figs. 1A and 1B are displayed in the display unit 110, and control in such a way that an operation guidance or the like is outputted as sound from the sound processing unit 107.

It is possible that a display processing program, a speech recognition processing program, a sound production processing program, or the like are recorded, for example, in a recorded medium such as DVD-ROM, and is read through the DVD drive 106, or is pre-recorded in a ROM of the RAM/ROM 117.

It is possible that a process which is realized by a software, such as a display processing program, a speech recognition processing program, a sound production processing program, is carried out by the same CPU as the system control unit 116.

### [3. Operation of Navigation Apparatus]

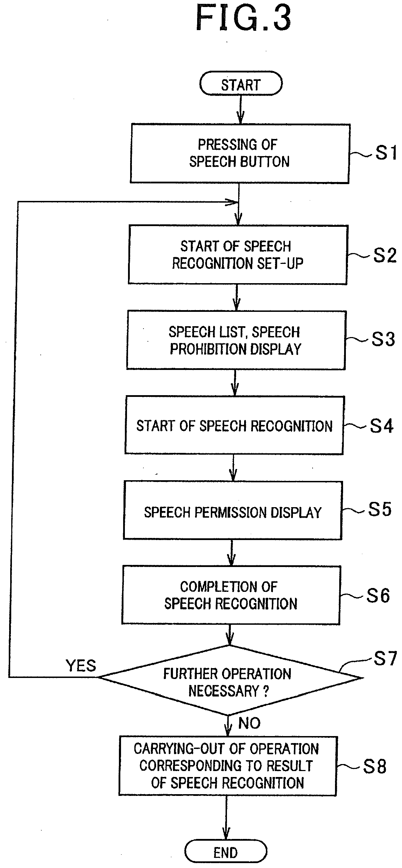

Referring now to Fig. 3, an operation of the navigation apparatus 100 will be explained.

Fig. 3 is a flow chart showing an example of flow of process of navigation apparatus 100 according to the embodiment.

When a user intends to make a speech of command to the navigation apparatus 100, and press a speech button, as shown in Fig. 3, the system condition monitoring unit 115 detects the pressing of speech button, and outputs a control signal to the system control unit 116 (step S1).

The control unit 116 which has received the control signal controls the speech recognition unit 114 so as to start a speech recognition process, so that a set-up process is started by the speech recognition unit 114 (step S2).

Further, the system control unit 116 controls the display control unit 112 in such a way that the speech list 1, the speech prohibition message 2a, the speech prohibition mark 3, and the guidance message 4 of "Please make a speech when you hear a beep." are displayed on a screen. Thus, a screen shown in Fig. 1A is displayed by the display unit 110 (step S3). At this time, the system control unit 116 controls the sound processing unit 107 in such a way that the same content as the guidance message 4 is outputted as sound. Thus, the sound of "Please make a speech when you hear a beep." Is outputted from the speaker 108.

The speech recognition unit 114 whose set-up operation has been completed starts a speech recognition process (step S4).

The system condition monitoring unit 115 which has detected the start of the speech recognition process outputs a control signal corresponding to the operation condition, to the system control unit 116. The system control unit 116 which has received the control signal controls the display control unit 112 in such a way that the speech prohibition message 2a and the speech prohibition mark 3 are erased from the screen, and the speech permission message 2b is displayed on the screen. Thus, a screen shown in Fig. 1B is displayed by the display unit 110 (step S5).

After that, when a speech recognition process by the speech recognition unit 114 is completed (step S6), a control signal corresponding to the operation condition is outputted from the system condition monitoring unit 115 to the system control unit 116.

The system control unit 116 receives a command or the like recognized by the speech recognition unit 114 from the speech recognition unit 114, and determines whether a further operation by a user (including an operation by the user's sound input) is necessary to carry out an operation corresponding to the command or the like (step S7). For example, when a command of "Search for Destination" is inputted, an operation of designating the destination is necessary in order to search for a route to the destination. In such case (step S7, YES), the same processes as the above steps S2 to S6 are repeated. At his time, as the speech list 1, for example, "Station", "Amusement Park", "Baseball Stadium", or the like indicative of genre of destination, is displayed. For example, a final destination is designated by the user's speech. When it is determined that a further operation is not necessary (step S7, NO), the system control unit 116 controls each unit of the navigation apparatus 100 in such a way that an operation corresponding to the result of speech recognition process is carried out (step S8).

As explained above, according to the embodiment, during a period of time from the pressing of speech button by a user to the start of speech recognition process by the speech recognition unit 114, the system control unit 116 displays the speech prohibition message 2a indicative of prohibition of speech in the position arranged in the same line as the speech list 1, and displays the speech prohibition mark 3 indicative of prohibition of speech in the position where it is overlaid on the speech list 1. After a speech recognition process has been started by the speech recognition unit 114, the speech prohibition message 2a and the speech prohibition mark 3 are erased from the screen.

Therefore, when a user reads the speech list 1 displayed on the screen, he also reads the speech prohibition message 2a, so he can easily recognize that he should not make a speech, even while seeing the speech list 1. After a speech recognition process has been started, the speech prohibition message 2a which was previously visually recognized is erased, so a user can easily recognize that he may make a speech. Further, when a user reads the speech list 1 displayed on the screen, he necessarily visually recognizes the speech prohibition mark 3, so he can easily recognize that he should not make a speech, even while seeing the speech list 1. After a speech recognition process has been started, the speech prohibition mark 3 which was previously visually recognized is erased, so a user can easily recognize that he may make a speech.

After a speech recognition process has been started by the speech recognition unit 114, the system control unit 116 controls in such a way that the speech permission message 2b indicative of speech permission is displayed at the position where the speech prohibition message 2a was displayed before, so a user can more easily recognize that he may make a speech.

Further, since a display mode, such as a font, a size and a weight of character, a character color, or a background color of the speech prohibition message 2a and the speech permission message 2b, is different from that of the speech list 1, it is easy to distinguish and visually recognize the speech prohibition message 2a or the like from the other characters, although they are in the same line as the speech list 1. Therefore, a user can more easily recognize the timing of making a speech.

### [4. Modification]

Now, a modification of the embodiment will be explained.

In the embodiment explained above, after a set-up operation has been completed, the speech recognition unit 114 automatically starts a speech recognition process. Hereinafter, a case will be explained, in which a speech recognition process is not started until a speech button is pressed again.

Among speech recognition apparatuses, there are some apparatuses in which a period of time during which a speech recognition process is carried out is limited in terms of a capacity of memory in which a speech made by a user is stored as speech information or the like. Therefore, there is, for example, a case where a speech recognition process is started while a user is reading a speech list, and then, the speech recognition process is finished when he tries to make a speech, so that a speech made by him cannot be recognized sufficiently. On the other hand, if a user tries to make a speech within a limited period of time in order to avoid such situation, he should read a speech list quickly, or there is a case where he cannot read a speech list sufficiently.

Under the circumstances, in a navigation apparatus according to a modification, even if a set-up operation has been completed by the speech recognition unit 114, a speech recognition process is not started until a speech button is pressed again.

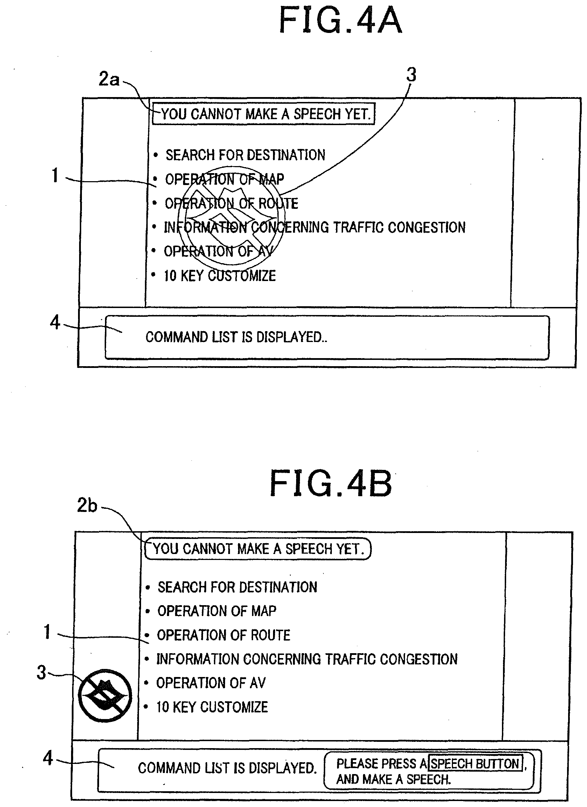

First, a configuration of display screen according to the modification will be explained with reference to Figs. 4A and 4B.

Figs. 4A and 4B are views showing an example of configuration of screen by a navigation apparatus according to a modification of the embodiment. Fig. 4A shows a screen immediately after the first pressing of speech button, and Fig. 4B shows a screen after a guidance sound has been played back. In Figs. 4A and 4B, the same characters are added to the same elements as in Figs. 1A and 1B.

First, immediately after a user has pressed a speech button, as shown in Fig. 4A, the speech list 1, the speech prohibition message 2a, and the speech prohibition mark 3 are displayed in the same mode as Fig. 1A. Further, as the guidance message 4, for example, "A command list is displayed" or the like is displayed. At this time, a guidance sound which encourages the re-pressing of speech button (for example, "Please press a speech button again, and make a speech.", or the like) is played back.

After the play back of the guidance sound has been completed, as shown in Fig. 4B, the display position of the speech prohibition mark 3 is changed to a position where it is not overlaid on the speech list 1 (for example, the left edge of the screen, or the like). Since the speech prohibition mark 3 is first displayed in an overlaid position with the speech list 1, the mark is recognized by a user. After that, since it is re-displayed in a position not overlaid with the speech list 1, it is easy to read the speech list 1, while the condition of speech prohibition is being recognized. It is not necessary that a design of the speech prohibition mark 3 shown in Fig. 4B is the same as that shown in Fig. 4A.

A message 5 for waiting for the pressing of speech button which encourages the pressing of speech button (for example, "Please press a speech button, and make a speech.", or the like) is displayed on the screen. The timing of displaying the message 5 for waiting for the pressing of speech button is not limited to the time after a guidance sound has been played back. For example, it is possible that it is displayed immediately after the pressing of speech button, or after a predetermined period of time has elapsed since the pressing of speech button. Further, it is possible that it is displayed when a set-up operation is completed, and a condition in which a speech recognition process can be started is accomplished.

Here, even if a set-up operation is completed, a speech recognition unit does not start a speech recognition process at least until a speech button is pressed again. Thus, the timing of making a speech is controlled by a user side, so he can read the speech list 1 deliberately.

After that, when a speech button is pressed by a user, the same screen as Fig. 1A is displayed. At this time, a user ought to have decided a speech to be made, and he does not need to read the speech list 1. Therefore, even if the speech prohibition mark 3 is displayed in an overlaid position with the original speech list 1, there is no problem. Considering the ease of visual recognition of the mark, it is better that it is displayed in an overlaid position with the speech list 1.

When a speech recognition process is started, the same screen as Fig. 1B is displayed. In a case where a set-up operation has been already completed when a speech button is pressed again, it is possible to omit a display screen shown in Fig. 1A.

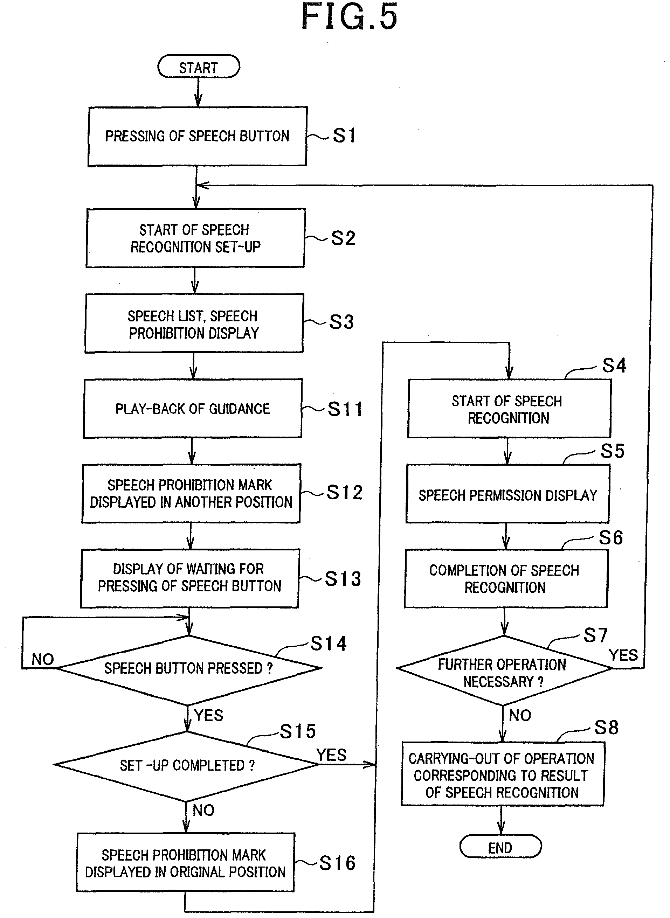

Now, an operation of the navigation apparatus 100 will be explained with reference to Fig. 5.

Fig. 5 is a flow chart showing an example of flow of process of navigation apparatus 100 according to a modification of the embodiment. In Fig. 5, the same characters are added to the same elements as in Fig. 3.

Similarly with Figs. 1A and 1B, when the system condition monitoring unit 115 detects the pressing of speech button (step S1), a set-up operation is started by the speech recognition unit 114 (step S2).

The system control unit 116 controls the display control unit 112 in such a way that the speech list 1, the speech prohibition message 2a, the speech prohibition mark 3, and the guidance message 4 are displayed on a screen. Thus, a screen shown in Fig. 4A is displayed (step S3).

When the system control unit 116 controls the sound processing unit 107 in such a way that a guidance sound which encourages the re-pressing of speech button is outputted, a sound of "Please press a speech button again, and make a speech.", is outputted from the speaker 108 (step S11).

When a play-back of guidance sound is finished, the system control unit 116 controls the display control unit 112 in such a way that the speech prohibition mark 3 is displayed in a position not overlaid with the speech list 1 (step S12), and controls the display control unit 112 in such a way that the message 5 for waiting for the pressing of speech button is displayed, so that a screen shown in Fig. 4B is displayed (step S13).

Now, the system control unit 116 proceeds to waiting for the pressing of speech button (step S14). When the user's pressing of speech button is detected by the system condition monitoring unit 115 (step S14, YES), the system control unit 116 determines whether a set-up operation has been completed by the speech recognition unit 114 (step S15). Here, in a case where the system condition monitoring unit 115 has detected the completion of set-up operation before a speech button is pressed (step S15, YES), the system control unit 116 makes the speech recognition unit 114 start a speech recognition process (step S4).

On the other hand, in a case where a set-up operation is not completed by the speech recognition unit 114 (step S15, NO), the system control unit 116 erases the message 5 for waiting for the pressing of speech button, and controls the display control unit 112 in such a way that the speech prohibition mark 3 is displayed in an overlaid position with the original speech list 1, so that a screen shown in Fig. 1A is displayed (step S16). The speech recognition unit 114 which has completed its set-up operation starts a speech recognition process (step S4).

After that, similarly with Fig. 3, a screen shown in Fig. 1B is displayed, and it is determined whether the next operation is necessary after the completion of speech recognition process (steps S5 to S7). In a case where the next operation is necessary (step S7, YES), processes of steps S2 to S6 are repeated. In a case where the next operation is not necessary (step S7, NO), an operation corresponding to the result of speech recognition process is carried out (step S8).

As explained above, according to the modification, when the speech button is pressed by a user, the system control unit 116 causes the speech prohibition mark 3 to be displayed in an overlaid condition with the speech list 1, and then, causes the mark to be displayed in a condition not overlaid with the speech list 1. Therefore, while the prohibition of speech is recognized by a user, the speech list 1 becomes easy to read.

Further, after the speech prohibition message 2a and th speech prohibition mark 3 are displayed, the system control unit 116 causes the speech recognition unit 114 not to start a speech recognition process until a speech button is pressed again. Therefore, a user can start to make a speech after he has read the speech list 1 deliberately.

In the embodiment explained above, a speech recognition apparatus according to the invention has been applied to a navigation apparatus. However, it is not limited to a navigation apparatus. For example, it can be applied to a variety of apparatuses which have such an arrangement that a list of speeches which can be recognized is displayed on a screen, and a speech recognition process is carried out based on a predetermined operation or the like.

The present invention is not limited to the above embodiment. The scope of the present invention is defined by the appended claims.

Japanese Patent Application No. 2006-1845 filed on January 6, 2006, including the specification, the claims, the drawings, and the abstract, is cited.

## Claims

1. A speech recognition apparatus, comprising:
recognition means (114) adapted to carry out a speech recognition process of recognizing the speech words of a user;
operation means (109) adapted to receive an operation to start the speech recognition process from the user; and
display means (110) adapted to display a speech list (1) including at least one of speech words recognizable by the recognition means (114) and a prohibition character (2a) indicative of prohibition of speech in the upper side of the speech list (1), when the operation means (109) receives the operation;
wherein a set-up period of time is necessary from a time when the operation means (109) receives the operation to a time when the recognition means (114) is ready to carry out the speech recognition process;
wherein the speech recognition process is started after the set-up period of time has been ended; and
wherein the display means (110) is adapted to display a permission character (2b) indicative of permission of speech after the set-up period has been ended, and continues to display the at least one of speech words recognizable by the recognition means (114) until after the speech recognition process has started.

2. The speech recognition apparatus according to claim 1,
wherein the display means (110) is adapted to display the permission character (2b) in a position where the prohibition character (2a) was displayed.

3. The speech recognition apparatus according to claim 1 or 2,
wherein the recognition means (114) is adapted to recognize a plurality of preset speech words.

4. A display method for a speech recognition apparatus, comprising:
carrying out a speech recognition process of recognizing speech words of a user;
receiving an operation to start the speech recognition process from the user;
displaying a speech list (1) including at least one of speech words recognizable by the speech recognition process and a prohibition character (2a) indicative of prohibition of speech in the upper side of the speech list (1) when the operation is received;
wherein a set-up period of time is necessary from a time of receiving of the operation to a time when the speech recognition process is ready to be carried out;
wherein the speech recognition process is started after the set-up period of time has been ended;
wherein a permission character (2b) indicative of permission of speech after the set-up period has been ended is displayed;
wherein it is continued to display the at least one of speech words recognizable by the speech recognition process until after the speech recognition process has started.

5. A display processing program configured to, when executed:
carry out a speech recognition process of recognizing speech words of a user;
receive an operation to start the speech recognition process from the user;
display a speech list (1) including at least one of speech words recognizable by the speech recognition process and a prohibition character (2a) indicative of prohibition of speech in the upper side of the speech list (1) when the operation is received;
wherein a set-up period of time is necessary from a time of receiving of the operation to a time when the speech recognition process is ready to be carried out;
wherein the speech recognition process is started after the set-up period of time has been ended;
wherein a permission character (2b) indicative of permission of speech after the set-up period has been ended is displayed; and
wherein it is continued to display the at least one of speech words recognizable by the speech recognition process until after the speech recognition process has started.

6. A recorded medium, an HD drive (105), or a RAM/ROM (117), comprising the display processing program of claim 5.

## Patentansprüche

1. Spracherkennungsvorrichtung, umfassend:
ein Erkennungsmittel (114), das dafür ausgelegt ist, einen Spracherkennungsprozess zum Erkennen der Sprechwörter eines Nutzers auszuführen;
ein Betriebsmittel (109), das dafür ausgelegt ist, eine Operation zum Beginnen des Spracherkennungsprozesses von dem Nutzer zu empfangen; und
ein Anzeigemittel (110), das dafür ausgelegt ist, eine Sprachliste (1) anzuzeigen, die mindestens eines von durch das Erkennungsmittel (114) erkennbaren Sprechwörtern (114) und ein Verbotszeichen (2a) enthält, welches das Verbot von Sprache im oberen Teil der Sprachliste (1) anzeigt, wenn das Betriebsmittel (109) die Operation empfängt;
wobei ein Einrichtungszeitraum ab einem Zeitpunkt, wo das Betriebsmittel (109) die Operation empfängt, bis zu einem Zeitpunkt, wo das Erkennungsmittel (114) bereit ist, den Spracherkennungsprozess auszuführen, notwendig ist;
wobei der Spracherkennungsprozess begonnen wird, nachdem der Einrichtungszeitraum beendet wurde; und
wobei das Anzeigemittel (110) dafür ausgelegt ist, ein Erlaubniszeichen (2b) anzuzeigen, das eine Erlaubnis von Sprache anzeigt, nachdem der Einrichtungszeitraum beendet wurde, und das mindestens eine von durch das Erkennungsmittel (114) erkennbaren Sprechwörtern (114) bis zu einem Zeitpunkt, nachdem der Spracherkennungsprozess gestartet wurde, weiterhin anzeigt.

2. Spracherkennungsvorrichtung nach Anspruch 1,
wobei das Anzeigemittel (110) dafür ausgelegt ist, das Erlaubniszeichen (2b) an einer Position anzuzeigen, an der das Verbotszeichen (2a) angezeigt wurde.

3. Spracherkennungsvorrichtung nach Anspruch 1 oder 2,
wobei das Erkennungsmittel (114) dafür ausgelegt ist, mehrere voreingestellte Sprechwörter zu erkennen.

4. Anzeigeverfahren für eine Spracherkennungsvorrichtung, umfassend:
Durchführung eines Spracherkennungsprozesses zur Erkennung von Sprechwörtern eines Nutzers;
Empfangen einer Operation zum Starten des Spracherkennungsprozesses von dem Nutzer;
Anzeigen einer Sprachliste (1), die mindestens eines von durch den Spracherkennungsprozess erkennbaren Sprechwörtern und ein Verbotszeichen (2a) enthält, das ein Verbot von Sprache im oberen Teil der Sprachliste (1) anzeigt, wenn die Operation empfangen wird;
wobei ein Einrichtungszeitraum ab einem Zeitpunkt des Empfangs der Operation bis zu einem Zeitpunkt, wo der Spracherkennungsprozess bereit ist, ausgeführt zu werden, notwendig ist;
wobei der Spracherkennungsprozess begonnen wird, nachdem der Einrichtungszeitraum beendet wurde; und
wobei ein Erlaubniszeichen (2b), das eine Erlaubnis von Sprache anzeigt, nachdem der Einrichtungszeitraum beendet wurde, angezeigt wird;
wobei das mindestens eine von durch den Spracherkennungsprozess erkennbaren Sprechwörtern bis zu einem Zeitpunkt, nachdem der Spracherkennungsprozess gestartet wurde, weiterhin angezeigt wird.

5. Anzeigeverarbeitungsprogramm, das dafür ausgebildet ist, wenn es ausgeführt wird:
einen Spracherkennungsprozess zum Erkennen von Sprechwörtern eines Nutzers auszuführen;
eine Operation zum Beginnen des Spracherkennungsprozesses von dem Nutzer zu empfangen;
eine Sprachliste (1) anzuzeigen, die mindestens eines von durch den Spracherkennungsprozess erkennbaren Sprechwörter und ein Verbotszeichen (2a) enthält, welches das Verbot von Sprache im oberen Teil der Sprachliste (1) anzeigt, wenn die Operation empfangen wird;
wobei ein Einrichtungszeitraum ab einem Zeitpunkt des Empfangs der Operation bis zu einem Zeitpunkt, wo der Spracherkennungsprozess bereit ist, ausgeführt zu werden, notwendig ist;
wobei der Spracherkennungsprozess begonnen wird, nachdem der Einrichtungszeitraum beendet wurde; und
wobei ein Erlaubniszeichen (2b), das eine Erlaubnis von Sprache anzeigt, nachdem der Einrichtungszeitraum beendet wurde, angezeigt wird;
wobei das mindestens eine von durch den Spracherkennungsprozess erkennbaren Sprechwörtern bis zu einem Zeitpunkt, nachdem der Spracherkennungsprozess gestartet wurde, weiterhin angezeigt wird.

6. Beschriebenes Medium, HD-Laufwerk (105) oder RAM/ROM (117), umfassend das Anzeigeverarbeitungsprogramm nach Anspruch 5.

## Revendications

1. Appareil de reconnaissance de la parole comprenant :
un moyen de reconnaissance (114) conçu pour exécuter un processus de reconnaissance de la parole consistant à reconnaître les mots de parole d'un utilisateur;
un moyen d'opération (109) conçu pour recevoir une opération pour démarrer le processus de reconnaissance de la parole de la part de l'utilisateur; et
un moyen d'affichage (110) conçu pour afficher une liste de paroles (1) comprenant au moins un mot de parole reconnaissable par le moyen de reconnaissance (114) et un caractère d'interdiction (2a) indiquant une interdiction de parole dans la partie supérieure de la liste de paroles (1), lorsque le moyen d'opération (109) reçoit l'opération;
dans lequel une période de temps d'établissement est nécessaire à partir du moment où le moyen d'opération (109) reçoit l'opération jusqu'à un moment où le moyen de reconnaissance (114) est prêt à exécuter le processus de reconnaissance de la parole;
dans lequel le processus de reconnaissance de la parole est démarré après la fin de la période de temps d'établissement; et
dans lequel le moyen d'affichage (110) est conçu pour afficher un caractère de permission (2b) indiquant la permission de parole après la fin de la période d'établissement, et continue à afficher le au moins un mot de parole reconnaissable par le moyen de reconnaissance (114) jusqu'à ce que le processus de reconnaissance de la parole ait démarré.

2. Appareil de reconnaissance de la parole selon la revendication 1,
dans lequel le moyen d'affichage (110) est conçu pour afficher le caractère de permission (2b) dans une position où le caractère d'interdiction (2a) était affiché.

3. Appareil de reconnaissance de la parole selon la revendication 1 ou 2,
dans lequel le moyen de reconnaissance (114) est conçu pour reconnaître une pluralité de mots de parole prédéfinis.

4. Procédé d'affichage pour un appareil de reconnaissance de la parole, comprenant de :
exécuter un processus de reconnaissance de la parole consistant à reconnaître des mots de parole d'un utilisateur;
recevoir une opération pour démarrer le processus de reconnaissance de la parole de la part de l'utilisateur;
afficher une liste de paroles (1) comprenant au moins un mot de parole reconnaissable par le processus de reconnaissance de la parole et un caractère d'interdiction (2a) indiquant une interdiction de parole dans la partie supérieure de la liste de paroles (1) lorsque l'opération est reçue;
dans lequel une période de temps d'établissement est nécessaire à partir du moment de la réception de l'opération jusqu'au moment où le processus de reconnaissance de la parole est prêt à être exécuté;
dans lequel le processus de reconnaissance de la parole est démarré après la fin de la période de temps d'établissement;
dans lequel un caractère de permission (2b) indiquant la permission de parole après la fin de la période d'établissement est affiché;
dans lequel l'affichage du au moins un mot de parole reconnaissable par le processus de reconnaissance de la parole se poursuit jusqu'à ce que le processus de reconnaissance de la parole ait démarré.

5. Programme de traitement d'affichage configuré pour, lorsqu'il est exécuté :
exécuter un processus de reconnaissance de la parole consistant à reconnaître des mots de parole d'un utilisateur;
recevoir une opération pour démarrer le processus de reconnaissance de la parole de la part de l'utilisateur;
afficher une liste de paroles (1) comprenant au moins un mot de parole reconnaissable par le processus de reconnaissance de la parole et un caractère d'interdiction (2a) indiquant une interdiction de parole dans la partie supérieure de la liste de paroles (1) lorsque l'opération est reçue;
dans lequel une période de temps d'établissement est nécessaire à partir du moment de la réception de l'opération jusqu'au moment où le processus de reconnaissance de la parole est prêt à être exécuté;
dans lequel le processus de reconnaissance de la parole est démarré après la fin de la période de temps d'établissement;
dans lequel un caractère de permission (2b) indiquant la permission de parole après la fin de la période d'établissement est affiché; et
dans lequel l'affichage du au moins un mot de parole reconnaissable par le processus de reconnaissance de la parole se poursuit jusqu'à ce que le processus de reconnaissance de la parole ait démarré.

6. Support enregistré, lecteur HD (105) ou RAM/ROM (117), comprenant le programme de traitement d'affichage de la revendication 5.
